# EUROPEAN PATENT SPECIFICATION

(11) **EP 4 258 413 B1**
(45) Date of publication and mention of the grant of the patent: **08.04.2026**
(21) Application number: 22911578.7
(22) Date of filing: 27.10.2022
(51) Int. Cl.: H01M 10/48, G01L 1/22, G01L 9/00, H01M 10/42, H01M 50/569, H01M 50/209

(54) **BATTERY SYSTEM AND BATTERY CELL ASSEMBLY**
BATTERIESYSTEM UND BATTERIEZELLENANORDNUNG
SYSTÈME DE BATTERIE ET ENSEMBLE DE CELLULES DE BATTERIE

(30) Priority: 24.12.2021 KR 20210187419
(43) Date of publication of application: 11.10.2023
(73) Proprietor: LG Energy Solution, Ltd., Seoul 07335 (KR)
(72) Inventor: KIM, Doyul, Daejeon 34122 (KR)
(74) Representative: Plasseraud IP
(86) International application number: PCT/KR2022/016522
(87) International publication number: WO 2023/120940

(56) References cited:
- JP-A- 2009 076 265
- JP-A- 2013 092 398
- KR-A- 20180 103 626
- KR-A- 20190 090 340
- KR-B1- 102 034 771
- US-A1- 2013 093 383
- US-A1- 2017 331 157
- HAIDAR E: "Smart Batteries Include Force and Pressure Sensing", TECH BRIEFS, 1 June 2021 (2021-06-01), pages 1 - 8, XP093289445, Retrieved from the Internet <URL:https://www.techbriefs.com/component/content/article/39238-smart-batteries-include-force-and-pressure-sensing> [retrieved on 20250624]

## Description

### [Technical Field]

### Cross-reference to related application(s)

This application claims priority to and the benefit of Korean Patent Application No. 10-2021-0187419 filed in the Korean Intellectual Property Office on December 24, 2021.

The present disclosure relates to a battery system and a battery cell assembly.

### [Background Art]

With the rapid growth of a secondary battery market, securing stability in battery use is emerging as an important task. A battery can reach dangerous conditions such as heating, smoking, ignition, and explosion, depending on various causes. If the battery in which abnormality occurs is ignited, gas may be generated and swell inside the battery before the ignition, and when the battery swells, the pressure inside the battery increases. US2013/093383 A1 discloses an apparatus for detecting a failure of a battery including a plurality of cell internal pressure sensors.

### [Disclosure]

### [Technical Problem]

The present disclosure has been made in an effort to provide a battery system which measures cell voltage of each of a plurality of battery cells and senses the abnormality of a battery to announce the abnormality of the battery in advance and take a protection action in a battery system including a battery pack.

### [Technical Solution]

An exemplary embodiment of the present disclosure provides a battery system including: a battery pack including a plurality of battery cells, and a plurality of pressure sensing pads connected to the plurality of battery cells in parallel, and attached to external surfaces of the plurality of battery cells, and having resistance values which vary according to an applied pressure; and a battery management system (BMS) configured to derive a plurality of cells voltages for the plurality of battery cells, respectively, and determining that battery pack is in an abnormal state when at least one of the plurality of derived cell voltages is equal to or less than a threshold voltage.

Each of the plurality of pressure sensing pads may include a sensor unit including a pressure sensor attached to the external surface of a corresponding battery cell among the plurality of battery cells, and having resistance which varies according to the pressure, a first wire connecting the sensor unit and a positive terminal of the corresponding battery cell, and a second wire connecting the sensor unit and a negative terminal of the corresponding battery cell.

Each of the plurality of pressure sensing pads may further include a coating portion formed in a shape of covering the sensor unit, the first wire, and the second wire to affix the sensor unit, the first wire, and the second wire onto one surface of the corresponding battery cell.

The sensor unit may have infinite resistance when the pressure is not applied to the pressure sensor, and a basic resistance value when the pressure applied to the pressure sensor reaches a predetermined level.

Assembly resistance of the corresponding battery cell may be parallel composite resistance in which the corresponding battery cell resistance and the resistance of the sensor unit are connected in parallel, and as the resistance of the sensor unit decreases, the assembly resistance of the corresponding battery cell may decrease.

The BMS is configured to determine occurrence of an abnormality occurs in the battery pack when the cell voltage of the corresponding battery cell decreases to the threshold voltage or less as the assembly resistance of the corresponding battery cell decreases.

The BMS is configured to stop an operation of the battery pack in response to the determination of occurrence of the abnormality in the battery pack.

Another exemplary embodiment of the present disclosure provides a battery cell assembly including: a battery cell; and a pressure sensing pad connected to the battery cell in parallel and attached to one surface of the battery cell, and having a resistance value which varies according to an applied pressure, and the pressure sensing pad includes a sensor unit including a pressure sensor attached to the external surface of the battery cell, and having a resistance which varies according to the pressure, a first wire connecting the sensor unit and a positive terminal of the battery cell, and a second wire connecting the sensor unit and a negative terminal of the battery cell.

The pressure sensing pad may further include a coating portion formed in a shape covering the sensor unit, the first wire, and the second wire to affix the sensor unit, the first wire, and the second wire onto one surface of the battery cell.

The sensor unit may have infinite resistance when the pressure is not applied to the pressure sensor, and have a basic resistance value when the pressure applied to the pressure sensor reaches a predetermined level.

The sensor unit and the corresponding battery cell are arranged such that as the resistance of the sensor unit decreases, total resistance of the sensor unit and corresponding battery cell decreases.

### [Advantageous Effects]

According to an exemplary embodiment of the present disclosure, in a battery system including a battery pack, cell voltage of each of battery cells can be measured by using a pressure sensor pad connected to each of a plurality of battery cells in parallel, and the abnormality of a battery can be sensed based on the measured cell voltage. Further, the abnormality of the battery can be announced in advance and a protection action can be taken.

### [Description of the Drawings]

FIG. 1 is a circuit diagram schematically illustrating a battery system according to an exemplary embodiment.
FIG. 2 is an exemplary diagram schematically illustrating a battery cell assembly according to an exemplary embodiment.
FIG. 3 is a circuit diagram schematically illustrating a detailed configuration of a sensor unit illustrated in FIG. 2.
FIG. 4 is an exemplary diagram schematically implementing one example of a battery pack according to an exemplary embodiment.

### [Mode for Invention]

Hereinafter, exemplary embodiments disclosed in this specification will be described in detail with reference to the accompanying drawings and the same or similar components are denoted by the same or similar reference numerals, and duplicated description thereof will be omitted. Suffixes "module" and/or "unit" for components used in the following description are given or mixed in consideration of easy preparation of the present disclosure only and do not have their own distinguished meanings or roles. Further, in describing an embodiment disclosed in the present invention, a detailed description of related known technologies will be omitted if it is determined that the detailed description makes the gist of the embodiment of the present invention unclear. Further, the accompanying drawings are provided for helping to easily understand exemplary embodiments disclosed in the present specification, and the technical spirit disclosed in the present specification is not limited by the accompanying drawings, and it will be appreciated that the present invention includes all of the modifications, equivalent matters, and substitutes included in the spirit and the technical scope of the present invention.

Terms including an ordinary number, such as first and second, are used for describing various elements, but the elements are not limited by the terms. The terms are used only to discriminate one element from another element.

In the present application, it should be understood that term "include" or "have"indicates that a feature, a number, a step, an operation, a component, a part or the combination thereof described in the specification is present, but does not exclude a possibility of presence or addition of one or more other features, numbers, steps, operations, components, parts or combinations thereof, in advance.

When abnormality occurs in a battery cell, internal pressure of the battery cell may rise and swell, and swelling of the battery cell may be referred to as a swelling phenomenon. A pressure sensor pad may be attached to the battery cell in order to sense the swelling of the battery cell.

A battery system will be described below in which in a battery pack including a plurality of battery cells, the pressure sensor pad is connected to each battery cell in parallel, and abnormality of the battery pack may be sensed based on a cell voltage change amount of each of the plurality of battery cells due to parallel connection of the pressure sensor pad.

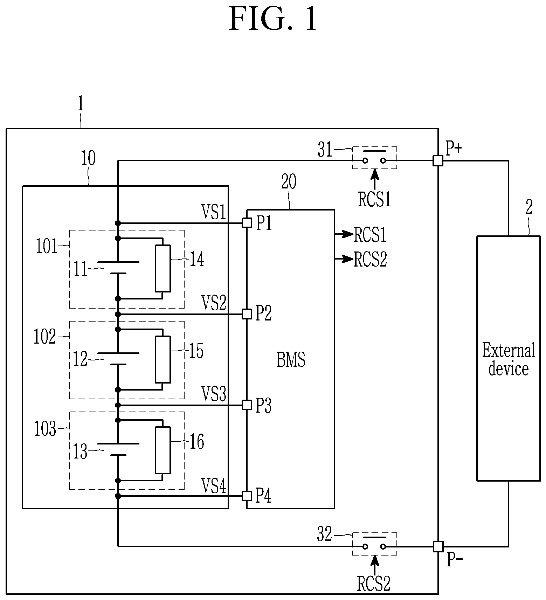

Hereinafter, a battery system including a pressure sensor pad will be described with reference to FIGS. 1 to 4.

FIG. 1 is a circuit diagram schematically illustrating a battery system according to an exemplary embodiment

The battery system 1 may include a battery pack 10, a battery management system (BMS) 20, and relays 31 and 32. It is illustrated that the number of battery packs 10 is 1 in FIG. 1, but the present invention is not limited thereto and the battery system 1 may include two or more battery packs.

An external device 2 may include at least one of a load and charging device such as an inverter, a converter, etc. When the external device 2 is a charger, both ends of the battery system 1 are connected to the charger and receive power from the charger to be charged. When the external device 2 is a load, both ends of the battery system 1 are connected to the load and the power supplied by the battery pack 10 may be discharged through the load.

The battery pack 10 may include a plurality of battery cell assemblies 101 to 103 connected in series. The plurality of battery cell assemblies 101 to 103 connected in series may include a plurality of battery cells 11 to 13 and a plurality of pressure sensor pads 14 to 16. For example, the battery cell assemblies 101 may include a battery cells 11 and corresponding pressure sensor pads 14. It is illustrated that the number of battery cell assemblies is 3 in FIG. 1, but the present invention is not limited thereto and the battery pack 10 may include two or more battery cell assemblies.

The BMS 20 may measure cell voltage of each of the plurality of battery cells 11 to 13, and sense the abnormality of the battery pack 10 and/or each of the plurality of battery cells 11 to 13 based on the measured cell voltage and threshold voltage. The threshold voltage may be predetermined as initial information.

The BMS 20 is connected to each of the plurality of battery cells 11 to 13, and a plurality of voltage measurement signals VS1 to VS4 measured from both ends of the plurality of battery cells 11 to 13 are acquired through a plurality of input terminals P1 to P4. A positive electrode of each (e.g., 11) of the plurality of battery cells 11 to 13 is connected to a corresponding input terminal (e.g., P1) among the plurality of input terminals P1 to P3 through a wire, and a negative electrode of each (e.g., 11) of the plurality of battery cells 11 to 13 is connected to a corresponding input terminal (e.g., P2) among the plurality of input terminals P2 to P4 through the wire. For example, the measurement signal VS1 is a positive voltage of the battery cell 11, and input into the BMS 20 through the input terminal P1, and the measurement signal VS2 is a negative voltage of the battery cell 11 or the positive voltage of the battery cell 12, and input into the BMS 20 through the input terminal P2.

The BMS 20 may derive plurality of cell voltage of each of the plurality of battery cells 11 to 13 from the plurality of voltage measurement signals VS1 to VS4. For example, the BMS 20 may derive the cell voltage of the battery cell 11 based on the measurement signal VS1 and the measurement signal VS2.

The relays 31 and 32 are positioned on the wires to electrically control a current path upon charging and discharging of the battery pack 10. Closing and opening of the relays 31 and 32 are controlled according to relay control signals RSC1 and RSC2 supplied from the BMS 20.

The plurality of pressure sensor pads 14 to 16 are connected parallel to the plurality of battery cells 11 to 13, respectively. When pressure is applied to each of the plurality of pressure sensor pads 14 to 16, each of the plurality of pressure sensor pads 14 to 16 may be implemented to include a pressure sensor of which resistance varies depending on a magnitude of the applied pressure. For example, the pressure sensor may be a force sensing resistor (FSR).

The pressure sensor pads 14 to 16 may be attached to external surfaces of the plurality of battery cells 11 to 13. For example, each of the plurality of battery cells 11 to 13 may be mounted on a pouch-type external case. Each of the pressure sensor pads 14 to 16 may be attached to one of the external surfaces of a pouch on which the corresponding battery cell is mounted in a close attachment type. Alternatively, the pressure sensor pads 14 to 16 may be attached onto an internal surface of the pouch-type external case or embedded in the external case itself. Hereinafter, it will be described that the pressure sensor pads 14 to 16 are attached to the external surfaces of the plurality of battery cells 11 to 13 for easy description.

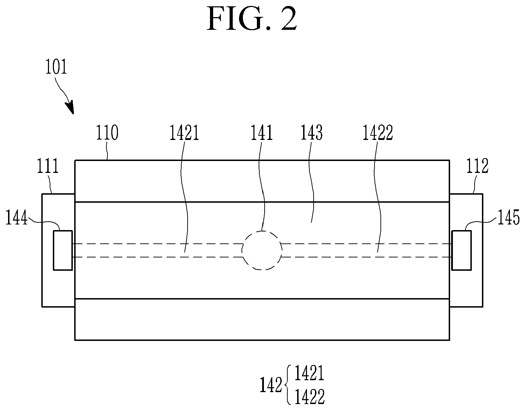

FIG. 2 is an exemplary diagram schematically illustrating a battery cell assembly according to an exemplary embodiment.

Hereinafter, the battery cell assembly 101 will be described. The description of the battery cell assembly 101 may be equally applied to each of the remaining battery cell assemblies 102 and 103 among the plurality of battery cell assemblies 101 to 103.

In the related art, in the battery pack including the plurality of battery cells, a thin FSR pressure sensor is inserted between the battery cells in order to sense pressure generated due to swelling of the battery cell. A large number of pressure sensors as possible should be inserted between the battery cells in order to sense pressure changes of the battery cells through the pressure sensor. In order for the BMS to receive sensing results of the pressure sensors, a plurality of channels and a plurality of wires should be added as many as the pressure sensors. As such, in the scheme in the related art, additional channels and wires are required according to the increase in number of pressure sensors, so there is a limit in inserting a lot of sensors into the battery pack.

According to an exemplary embodiment of the present disclosure, each of the plurality of pressure sensor pads 14 to 16 is connected to the corresponding battery cell among the plurality of battery cells 11 to 13 in parallel. When resistance of the pressure sensor pad 14 connected parallel to the battery cell 11 is reduced, assembly resistance of the battery cell assembly 101 is reduced. The assembly resistance of the battery cell assembly means parallel composite resistance in which battery cell resistance and resistance of the sensor unit connected to the battery cell in parallel are connected in parallel.

The cell voltage of the battery cell 11 is reduced according to the reduction of the assembly resistance of the battery cell assembly 101. When the BMS 20 senses the cell voltage reduction of the battery cell 11, a battery pack 10 in which the swelling battery cell among the plurality of battery cells 11 to 13 is generated may be determined as an abnormal state. When the battery cell 11 among the plurality of battery cells 11 to 13 swells or when the battery cell 12 adjacent to the battery cell 11 swells, the resistance of the pressure sensor pad 14 may be reduced.

The battery cell assembly 101 may include the battery cell 11 and the pressure sensor pad 14.

The battery cell 11 may include a body part 110, a first terminal 111, and a second terminal 112. The first terminal 111 may be the positive electrode (or negative electrode) of the battery cell 11 and the second terminal 112 may be the negative electrode (or positive electrode) of the battery cell 11.

The pressure sensor pad 14 may include a sensor unit 141, a wire 142, and a coating portion 143. The pressure sensor pad 14 may be attached to at least a partial area on one surface of the body part 110. Alternatively, the pressure sensor pad 14 may be attached to at least a partial area on one surface and at least a partial area on the other surface of the body part 110. The sensor unit 141 may include one or more pressure sensors, and the pressure sensor may be implemented as an element of which resistance varies depending on the pressure. For example, the pressure sensor may be implemented as at least one FSR, when there is a plurality of FSRs, the plurality of FSRs may be connected to each other in parallel.

The pressure sensor may include two electrodes, and a film layer coated with a conductive material positioned between two electrodes.

The wire 142 may include a wire 1421 connecting the sensor unit 141 and the first terminal 111 and a wire 1422 connecting the sensor unit 141 and the second terminal 112.

The wire 1421 may be electrically connected to the first terminal 111 through welding and a welding portion 144 connecting and fixing the wire 1421 and the first terminal 111 by the welding may be formed on one surface of the first terminal 111. The wire 1422 may be electrically connected to the second terminal 112 through the welding and a welding portion 145 connecting and fixing the wire 1422 and the second terminal 112 by the welding may be formed on one surface of the second terminal 112.

The sensor unit 141 may be attached to a predetermined location on one surface of the body part 110. The coating portion 143 is formed in a shape to cover the sensor unit 141 and the wire 142 to fix the sensor unit 141 and the wire 142 onto one surface of the body part 110. The coating portion 143 may be implemented in the form of a flexible printed circuit board (FPCB).

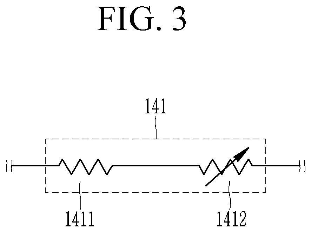

Hereinafter, an equivalent circuit of the sensor unit 141 will be described with reference to FIG. 3.

FIG. 3 is a circuit diagram schematically illustrating a detailed configuration of a sensor unit illustrated in FIG. 2.

Hereinafter, the description of the sensor unit 141 included in the pressure sensor pad 14 of the battery cell assembly 101 and a detailed configuration thereof may be equally applied to the sensor units included in the pressure sensor pads of the remaining battery cell assemblies 102 and 103 among the plurality of battery cell assemblies 101 to 103 and a detailed configuration thereof.

The sensor unit 141 may include a basic resistor 1411 and a pressure sensor 1412 connected in series. The pressure sensor 1412 may have a resistance value which varies between 0 and infinity depending on the applied pressure. As a result, in FIG. 3, the pressure sensor 1412 is illustrated as a variable resistor.

The sensor unit 141 has infinite resistance when the pressure is not applied to the pressure sensor 1412 and the resistance of the sensor unit 141 decreases as the pressure applied to the pressure sensor 1412 increases. When the pressure applied to the pressure sensor 1412 reaches a predetermined level, a resistance value of the pressure sensor 1412 becomes 0 and the resistance of the sensor unit 141 may have a resistance value of the basic resistor 1411. The basic resistor 1411 may have several kΩ of resistance.

One end of the sensor unit 141 may be connected to the first terminal 111 through the wire 1421 and the other end of the sensor unit 141 may be connected to the second terminal 112 through the wire 1422.

When the plurality of pressure sensor pads 14 to 16 are connected to the plurality of battery cells 11 to 13, respectively in parallel, the resistance of the battery cell (e.g., 11) of each of the plurality of battery cells 11 to 13 and the resistance of the sensor unit (e.g., 141) of the corresponding pressure sensor pad (e.g., 14) among the plurality of pressure sensor pads 14 to 16 are connected in parallel. The resistance of the battery cell may include internal resistance of the battery cell.

The assembly resistance of each of the plurality of battery cell assemblies 101 to 103 may be represented as parallel composite resistance in which the cell resistance of each of the plurality of battery cells 11 to 13 and the resistance of the sensor unit of each of the plurality of pressure sensor pads 14 to 16 are connected in parallel. Therefore, the assembly resistance of each (e.g., 101) of the plurality of battery cell assemblies 101 to 103 may decrease as the resistance of the corresponding sensor unit (e.g., 141) decreases.

Further, when the battery cell (e.g., 11) among the plurality of battery cells 11 to 13) swells and the pressure is applied to the pressure sensor of the adjacent battery cell (e.g., 12), the resistance of the sensor unit corresponding to the adjacent battery cell 12 may decrease

As the resistance of the sensor unit 141 decreases, the cell voltage of the battery cell 11 in which the assembly resistance of the corresponding battery cell assembly 101 and the pressure sensor pad 14 are connected in parallel may decrease.

The BMS 20 may derive the cell voltage of each of the plurality of battery cells 11 to 13, and when at least one of the plurality of cell voltages decreases to the threshold voltage or less, the BMS 20 may be determined that the abnormality occurs in the battery pack 10 as an abnormal state in which one of the plurality of battery cells 11 to 13 swells. When the BMS 20 determines that the abnormality occurs in the battery pack 10, the BMS 20 may perform a protection operation and an external announcement for pack abnormality.

The protection operation for the pack abnormality may include an operation of stopping the operation of the battery pack 10. For example, when the BMS 20 determines that the abnormality occurs in the battery pack 10, the BMS 20 may stop charging/discharging of the battery pack 10.

When at least one of the plurality of cell voltages decreases to the threshold voltage or less based on the plurality of cell voltages, the BMS 20 may judge at least one battery cells of the plurality of battery cells 11 to 13 as the abnormal cell.

For example, when swelling occurs in the battery cell 12, the pressure may be applied to at least one of the pressure sensors corresponding to other adjacent battery cells 11 and 13, respectively. In this case, since a decrease degree of the cell voltage of battery cell 12 in which swelling occurs is larger than a decrease degree of the cell voltage of each of other adjacent battery cells 11 and 13, the BMS 20 may judge the battery cell 12 as the abnormal cell.

The BMS 20 may categorize the state of the battery pack 10 and/or each of the plurality of battery cells 11 to 13 into at least one abnormal symptom based on the plurality of cell voltages.

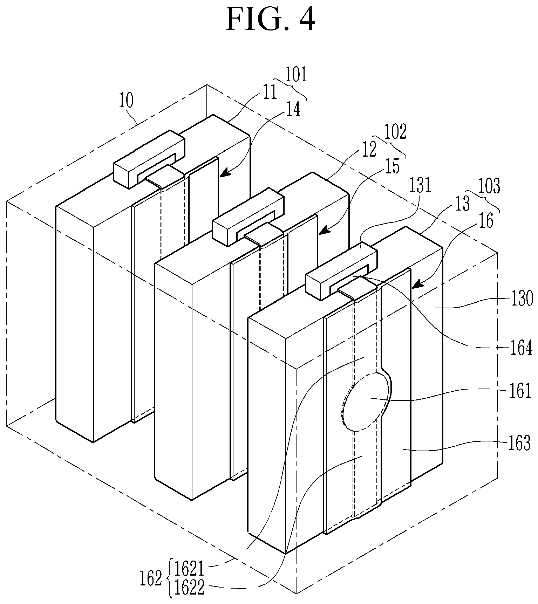

FIG. 4 is an exemplary diagram schematically implementing one example of a battery pack according to an exemplary embodiment.

The plurality of battery cell assemblies 101 to 103 are included in the battery pack 10, and each (e.g., 103) of the plurality of battery cell assemblies 101 to 103 includes one (e.g., 13) of the plurality of battery cells 11 to 13 and the corresponding pressure sensor pad (e.g. 16) among the plurality of pressure sensors pad 14 to 16. The plurality of respective battery cells 11 to 13 are stacked so that a predetermined distance is maintained between the cells. Each of the plurality of pressure sensor pads 14 to 16 may be attached to one surface of each of the plurality of battery cells 11 to 13, and may be connected and fixed between the positive electrode and the negative electrode of each of the plurality of battery cells 11 to 13 through the welding.

It is illustrated that the number of battery cell assemblies is 3 in FIG. 4, but the present invention is not limited thereto and the battery pack 10 may include two or more battery cell assemblies. Hereinafter, the battery cell assembly 103 will be described. The description of the battery cell assembly 103 may be equally applied to each of the remaining battery cell assemblies 101 and 102 among the plurality of battery cell assemblies 101 to 103.

The battery cell 13 includes the body part 130 and the first terminal 131. The first terminal 131 may be the positive electrode (or negative electrode) of the battery cell 13.

The pressure sensor pad 16 may include the sensor unit 161, the wire 162, the coating portion 163, and the welding portion 164. The wire 162 may include a wire 1621 and a wire 1622 connecting the sensor unit 161 and the first terminal 131.

The welding portion 164 is formed on one surface of the first terminal 131 to electrically connect the wire 1621 to the first terminal 131. A connection portion of the wire 1621 to the first terminal 131 may be fixed by the welding portion 164.

Although not illustrated in FIG. 4, the second terminal is positioned on a surface facing a surface on which the first terminal 131 of the battery cell 13 is positioned. By the same scheme, the wire 1622 may be electrically connected to the second terminal through the welding.

The coating portion 163 may be formed in a shape of covering the sensor unit 161, the wire 1621, and the wire 1622.

The description of each of the sensor unit 141, the wire 142, the coating portion 143, and the welding portions 144 and 145 of FIG. 2 may also be equally applied to each of the sensor unit 161, the wire 162, the coating portion 163, and the welding portion 164 of FIG. 4.

As such, in the battery system 1 according to an exemplary embodiment, when abnormal pressure of the battery cells 11 to 13 increases, the FSR reacts, so the resistance of the sensor unit (e.g., 141) may decrease from the infinity up to the basic resistance value, and the cell voltages of the battery cells 11 to 13 may decrease due to the resistance decrease of the sensor unit 141. The BMS 20 may sense the abnormality of the battery pack 10 and/or the plurality of battery cells 11 to 13 based on the change of the battery cell voltage.

While this invention has been described in connection with what is presently considered to be practical exemplary embodiments, it is to be understood that the invention is not limited to the disclosed embodiments. On the contrary, it is intended to cover various modifications and equivalent arrangements included within the scope of the appended claims.

## Claims

1. A battery system (1) **characterized in that** the battery system comprises:
a battery pack (10) including a plurality of battery cells, and a plurality of pressure sensing pads (14-16) connected to the plurality of battery cells (11-13) in parallel, respectively, and attached to external surfaces of the plurality of battery cells, and having resistance values which vary according to an applied pressure; and
a battery management system (BMS) (20) configured to derive a plurality of cell voltages for the plurality of battery cells, respectively, and determine that the battery pack is in an abnormal state when at least one of the plurality of derived cell voltages is equal to or less than a threshold voltage.

2. The battery system of claim 1, wherein:
each of the plurality of pressure sensing pads includes,
a sensor unit including a pressure sensor attached to the external surface of a corresponding battery cell among the plurality of battery cells, and having a resistance which varies according to the applied pressure,
a first wire connecting the sensor unit and a positive terminal of the corresponding battery cell, and
a second wire connecting the sensor unit and a negative terminal of the corresponding battery cell.

3. The battery system of claim 2, wherein:
each of the plurality of pressure sensing pads further includes,
a coating portion (143) formed in a shape of covering the sensor unit, the first wire, and the second wire to affix the sensor unit, the first wire, and the second wire onto one surface of the corresponding battery cell.

4. The battery system of claim 2, wherein:
the sensor unit,
has infinite resistance when pressure is not applied to the pressure sensor, and a basic resistance value when the applied pressure reaches a predetermined level.

5. The battery system of claim 4, wherein:
the sensor unit and the corresponding battery cell are arranged such that as the resistance of the sensor unit decreases, a total resistance of the sensor unit and corresponding battery cell decreases.

6. The battery system of claim 5, wherein:
the BMS is configured to determine occurrence of an abnormality occurs in the battery pack when the cell voltage of the corresponding battery cell decreases to the threshold voltage or less as the total resistance of the sensor unit and the corresponding battery cell decreases.

7. The battery system of claim 6, wherein:
the BMS is configured to stop an operation of the battery pack in response to the determination of occurrence of the abnormality in the battery pack.

## Patentansprüche

1. Batteriesystem (1), **dadurch gekennzeichnet, dass** das Batteriesystem umfasst:
einen Batteriepack (10), welcher eine Mehrzahl von Batteriezellen und eine Mehrzahl von Druckmesspads (14-16) umfasst, welche jeweils parallel zu der Mehrzahl von Batteriezellen (11-13) geschaltet sind und an äußeren Flächen der Mehrzahl von Batteriezellen angebracht sind und Widerstandswerte aufweisen, welche gemäß einem ausgeübten Druck variieren; und
ein Batteriemanagementsystem (BMS) (20), welches dazu eingerichtet ist, für die Mehrzahl von Batteriezellen jeweils eine Mehrzahl von Zellenspannungen abzuleiten und zu bestimmen, dass der Batteriepack in einem abnormalen Zustand ist, wenn wenigstens eine der Mehrzahl von Zellenspannungen gleich wie oder kleiner als eine Schwellenspannung ist.

2. Batteriesystem nach Anspruch 1, wobei:
jedes der Mehrzahl von Druckmesspads
eine Sensoreinheit, welche einen Drucksensor umfasst, der an der äußeren Fläche einer entsprechenden Batteriezelle unter der Mehrzahl von Batteriezellen angebracht ist und einen Widerstand aufweist, welcher gemäß dem ausgeübten Druck variiert,
einen ersten Draht, welcher die Sensoreinheit und einen positiven Anschluss der entsprechenden Batteriezelle verbindet, und
einen zweiten Draht umfasst, welcher die Sensoreinheit und einen negativen Anschluss der entsprechenden Batteriezelle verbindet.

3. Batteriesystem nach Anspruch 2, wobei:
jedes der Mehrzahl von Druckmesspads ferner
einen Beschichtungsabschnitt (143) umfasst, welcher in einer derartigen Form gebildet ist, dass er die Sensoreinheit, den ersten Draht und den zweiten Draht abdeckt, um die Sensoreinheit, den ersten Draht und den zweiten Draht an einer Fläche der entsprechenden Batteriezelle zu fixieren.

4. Batteriesystem nach Anspruch 2, wobei:
die Sensoreinheit
einen unendlichen Widerstand, wenn kein Druck auf den Drucksensor ausgeübt wird, und einen Basiswiderstandswert aufweist, wenn der ausgeübte Druck ein vorbestimmtes Niveau erreicht.

5. Batteriesystem nach Anspruch 4, wobei:
die Sensoreinheit und die entsprechende Batteriezelle derart angeordnet sind, dass, wenn der Widerstand der Sensoreinheit abnimmt, ein Gesamtwiderstand der Sensoreinheit und der entsprechenden Batteriezelle abnimmt.

6. Batteriesystem nach Anspruch 5, wobei:
das BMS dazu eingerichtet ist, zu bestimmen, dass ein Auftreten einer Anomalie in dem Batteriepack auftritt, wenn die Zellenspannung der entsprechenden Batteriezelle auf die Schwellenspannung oder niedriger abnimmt, wenn der Gesamtwiderstand der Sensoreinheit und der entsprechenden Batteriezelle abnimmt.

7. Batteriesystem nach Anspruch 6, wobei:
das BMS dazu eingerichtet ist, in Reaktion auf die Bestimmung eines Auftretens der Anomalie in dem Batteriepack einen Betrieb des Batteriepacks zu stoppen.

## Revendications

1. Système de batterie (1) **caractérisé en ce que** le système de batterie comprend :
un bloc-batterie (10) comportant une pluralité de cellules de batterie, et une pluralité de coussinets de détection de pression (14-16) respectivement connectés à la pluralité de cellules de batterie (11-13) en parallèle, et fixés à des surfaces externes de la pluralité de cellules de batterie, et ayant des valeurs de résistance qui varient en fonction d'une pression appliquée ; et
un système de gestion de batterie (BMS) (20) configuré pour dériver respectivement une pluralité de tensions de cellule pour la pluralité de cellules de batterie, et déterminer que le bloc-batterie est dans un état anormal lorsqu'au moins une parmi la pluralité de tensions de cellule dérivées est inférieure ou égale à une tension seuil.

2. Système de batterie selon la revendication 1, dans lequel :
chacun de la pluralité de coussinets de détection de pression comporte,
une unité de capteur comportant un capteur de pression fixé à la surface externe d'une cellule de batterie correspondant parmi la pluralité de cellules de batterie, et ayant une résistance qui varie en fonction de la pression appliquée,
un premier fil connectant l'unité de capteur et une borne positive de la cellule de batterie correspondante, et
un deuxième fil connectant l'unité de capteur et une borne négative de la cellule de batterie correspondante.

3. Système de batterie selon la revendication 2, dans lequel :
chacun de la pluralité de coussinets de détection de pression comporte en outre,
une partie de revêtement (143) formée en une forme recouvrant l'unité de capteur, le premier fil et le deuxième fil pour fixer l'unité de capteur, le premier fil et le deuxième fil sur une surface de la cellule de batterie correspondante.

4. Système de batterie selon la revendication 2, dans lequel :
l'unité de capteur,
présente une résistance infinie lorsque la pression n'est pas appliquée sur le capteur de pression, et une valeur de résistance de base lorsque la pression appliquée atteint un niveau prédéterminé.

5. Système de batterie selon la revendication 4, dans lequel :
l'unité de capteur et la cellule de batterie correspondante sont agencées de sorte qu'à mesure que la résistance de l'unité de capteur diminue, une résistance totale de l'unité de capteur et de la cellule de batterie correspondante diminue.

6. Système de batterie selon la revendication 5, dans lequel :
le BMS est configuré pour déterminer si une anomalie se produit dans le bloc-batterie lorsque la tension de cellule de la cellule de batterie correspondante diminue jusqu'à la tension seuil ou moins à mesure que la résistance totale de l'unité de capteur et de la cellule de batterie correspondante diminue.

7. Système de batterie selon la revendication 6, dans lequel :
le BMS est configuré pour arrêter un fonctionnement du bloc-batterie en réponse à la détermination de la survenue de l'anomalie dans le bloc-batterie.
